# FASCICULE DE BREVET EUROPEEN

(11) **EP 0 821 469 B1**
(45) Date de publication et mention de la délivrance du brevet: **15.01.2003**
(21) Numéro de dépôt: 97410080.2
(22) Date de dépôt: 24.07.1997
(51) Int. Cl.: H02M 7/06

(54) **Alimentation continue haute et basse tension**
Hoch- und Niederspannungsgleichstromversorgung
High voltage and low voltage DC power supply

(30) Priorité: 26.07.1996 FR 9609681
(43) Date de publication de la demande: 28.01.1998
(73) Titulaire: STMicroelectronics S.A., 92120 Montrouge (FR)
(72) Inventeur: Wuidart, Luc, 83910 Pourrieres (FR); Bailly, Alain, 13109 Simiane (FR)
(74) Mandataire: de Beaumont, Michel

(56) Documents cités:
- EP-A- 0 714 139
- EP-A- 0 714 160
- DE-A- 2 836 325
- US-A- 4 801 887
- SERGEYEV V S: "INVESTIGATION OF THE POSSIBILITY OF USING CAPACITOR SECONDARY POWER SUPPLIES" TELECOMMUNICATIONS AND RADIO ENGINEERING, vol. 48, no. 10, 1 octobre 1993, pages 7-13, XP000540383

## Description

La présente invention concerne un dispositif de fourniture de tensions d'alimentation continues haute et basse.

Dans la présente demande, on appelle haute tension une tension correspondant par exemple à la tension du secteur redressée, c'est-à-dire une tension d'une valeur de crête de l'ordre de quelques centaines de volts. On appelle basse tension une tension petite devant la susdite tension, par exemple une tension de commande ou d'alimentation de circuits électroniques, c'est-à-dire une tension de l'ordre de quelques volts à une dizaine de volts.

De façon générale, dans l'état de la technique, quand on veut simultanément alimenter en continu une charge et divers circuits de commande de cette charge, on prévoit un premier circuit d'alimentation pour la charge et un deuxième circuit d'alimentation pour les circuits de commande. L'inconvénient d'une telle duplication résulte, d'une part, de la duplication elle-même, d'autre part, du fait que chacun des circuits présente ses propres pertes ohmiques.

On utilise également des transformateurs à secondaires multiples qui présentent l'inconvénient de nécessiter des enroulements et donc d'être encombrants et coûteux.

Le brevet américain 4 801 887 décrit une source de haute et basse tension comprenant toutes les caractéristiques du préambule de la revendication 1.

Un article de V.S. Sergeyev, paru dans "Télécommunications and Radio Engineering", vol. 48, N° 10, octobre 1993, pages 7 à 13, suggère d'utiliser dans un générateur de tension une diode Zener ou un dispositif à retournement pour fixer une tension de régulation.

Un objet de la présente invention est de prévoir un circuit fournissant à la fois des tensions continues haute et basse, sans que le circuit de fourniture de tension basse entraîne l'apparition de pertes ohmiques supplémentaires.

Pour atteindre ces objets, la présente invention prévoit un dispositif selon la revendication 1.

Ces objets, caractéristiques et avantages ainsi que d'autres de la présente invention seront exposés en détail dans la description suivante de modes de réalisation particuliers faite, à titre non-limitatif, en relation avec les figures jointes parmi lesquelles :
la figure 1 représente un premier exemple de source d'alimentation haute et basse selon la présente invention ; et
la figure 2 représente un deuxième exemple de source d'alimentation haute et basse selon la présente invention.

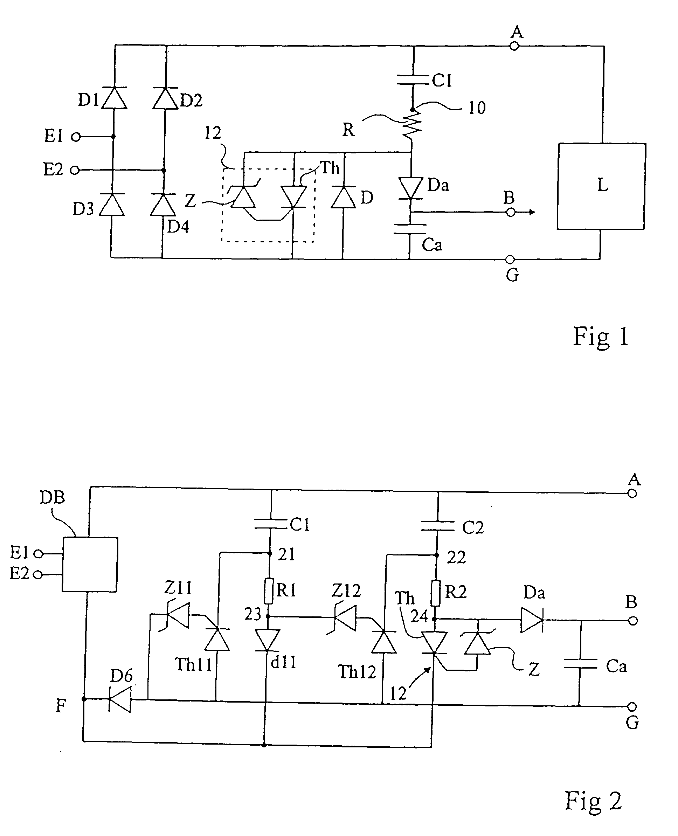

La figure 1 représente un exemple de mise en oeuvre de la présente invention basé sur un circuit classique d'alimentation d'une charge par la tension du secteur redressée. La tension du secteur disponible sur des bornes E1 et E2 est redressée par un pont redresseur DB comprenant par exemple des diodes D1 à D4 et la tension redressée est fournie aux bornes A et G d'une charge. De façon classique, pour assurer un lissage de la tension, il est prévu entré les bornes A et G un condensateur C1. Ainsi, quand le condensateur est chargé et que la tension d'entrée redressée chute en dessous de la charge du condensateur, c'est celui-ci qui alimente la charge. Bien entendu, de nombreuses variantes d'un tel système sont connues dans la technique, notamment pour améliorer la régulation et/ou la forme d'onde des pics de courant extraits du secteur pendant la charge du condensateur.

Bien souvent, la charge L est associée à des circuits électroniques qui nécessitent une tension d'alimentation de faible valeur. Pour fournir cette tension, la présente invention prévoit, entre la deuxième borne 10 du condensateur et la borne G la connexion en série d'une diode Da et d'un condensateur Ca. La diode Da est polarisée pour permettre la charge du condensateur C1 et du condensateur Ca. Pour permettre la décharge du condensateur C1, une diode D polarisée dans le sens adéquat est connectée entre les bornes A et G. Cette diode D pourra être remplacée par un dispositif commandé à conduction unidirectionnelle si l'on veut contrôler les périodes de décharge du condensateur C1. Enfin, pour réguler la tension sur le condensateur Ca, il est prévu en parallèle sur ce condensateur Ca, un dispositif à retournement 12 qui devient passant entre les bornes 10 et G dès que la tension à ses bornes dépasse un seuil déterminé. L'avantage d'un dispositif à retournement par rapport à une diode zener est que, quand ce dispositif est conducteur, la chute de tension à ses bornes est négligeable. Ce dispositif à retournement peut être une diode de Shockley ou, comme cela est représenté, l'association d'un thyristor Th et d'une diode zener Z.

Le fonctionnement de ce dispositif est le suivant.

Tandis que le condensateur C1 se charge, dans une première phase, le condensateur Ca se charge simultanément. Eventuellement, une résistance R est placée en série dans la chaîne C1, Da, Ca pour limiter l'appel de courant à la mise sous tension des condensateurs C1 et Ca et l'appel de courant lors de la mise en conduction du thyristor Th.

Dès que le condensateur Ca est polarisé à la valeur fixée par le dispositif 12 (tension de la diode zener Z, plus chute de tension gâchette-cathode du thyristor, moins chute de tension en direct de la diode Da), le dispositif 12 entre en conduction et le condensateur C1 continue à se charger d'une façon pratiquement non-modifiée par rapport à la configuration classique où sa borne 10 est connectée directement à la borne G.

Pendant la période où la tension aux bornes du condensateur C1 est supérieure à la tension du secteur, ce condensateur C1 alimente la charge L par l'intermédiaire de la diode D.

On a ainsi obtenu, à partir d'une source de tension continue haute, éventuellement régulée, constituée par le condensateur C1, une source de tension continue basse régulée entre les bornes A et G du condensateur Ca, sans rajouter d'éléments inductifs et de pertes ohmiques.

La figure 2 représente une application du circuit selon la présente invention au cas où le circuit de fourniture de tension haute est un circuit spécifique destiné à fournir des appels de courant élargis sur le secteur (circuit de correction de facteur de puissance). Un pont redresseur DB reçoit la tension du secteur entre des bornes E1 et E2 et fournit une tension redressée entre des bornes A et F. Ce circuit comprend au moins deux étages.

Au premier étage, un condensateur de stockage C1 est associé à un chemin de charge et à un chemin de décharge. Le chemin de charge comprend, entre une borne 21 et la borne F, une résistance R1 et une diode d11 polarisée pour laisser passer le courant de charge. Le chemin de décharge comprend un thyristor Th11 dont la gâchette est reliée à l'anode par une diode zener Z11. L'anode du thyristor Th11 est reliée à la borne G et à la borne F par l'intermédiaire d'une diode D6. Ainsi, le condensateur C1 n'entre dans une phase de décharge que quand la tension sur la borne A devient inférieure à son maximum sensiblement de la tension d'avalanche de la diode zener Z11.

Le deuxième étage comprend des éléments similaires à ceux du premier étage. Le chemin de décharge du condensateur C2 comporte, à partir de la deuxième borne 22 de ce condensateur, un thyristor Th12 dont la gâchette est reliée au point de connexion 23 entre la résistance R1 et la diode d11. Ainsi, la décharge du condensateur C1 s'arrête et la décharge du condensateur C2 commence quand la différence de potentiel entre les noeuds 21 et 22 devient sensiblement égale à la tension d'avalanche de la diode zener Z12. Le chemin de charge du condensateur C2 comporte une résistance R2 dont la borne 24 est reliée à la borne G par l'intermédiaire de la connexion en série d'une diode Da et d'un condensateur auxiliaire Ca. Un composant de limitation de tension 12, du type diode de Shockley, comprenant par exemple un thyristor Th dont la gâchette est reliée à l'anode par une diode zener Z limite la tension aux bornes de la connexion en série de la diode Da, du condensateur Ca et de la diode D6.

Dans le circuit de la figure 2, tandis que le condensateur C2 se charge, le condensateur Ca se charge simultanément à une tension qui correspond sensiblement à la tension de seuil de la diode zener Z (plus la chute de tension gâchette-cathode du thyristor Th, moins les chutes de tension en direct dans les diodes D6 et Da). On obtient donc bien entre les bornes B et G une tension faible devant la tension présente entre les bornes A et G. Quand le condensateur Ca est complètement chargé, au seuil souhaité, la diode zener Z entraîne la mise en conduction du thyristor Th. Le condensateur Ca ne peut pas se décharger dans ce thyristor en raison de la présence de la diode Da. Le condensateur C2 continue à se charger et sa charge est réduite seulement de la faible chute de tension aux bornes du thyristor Th à l'état passant. Ainsi, la présence du condensateur auxiliaire Ca constituant une source de tension auxiliaire, n'entraîne pas de pertes ohmiques supplémentaires dans le circuit.

Le circuit de la figure 2 ne constitue qu'un exemple des nombreuses applications possibles de la présente invention. Bien entendu, la présente invention est susceptible de nombreuses variantes qui apparaîtront à l'homme de l'art et l'on notera essentiellement les deux caractéristiques suivantes :
- fourniture simultanée de tensions continues haute et basse,
- réalisation de la source de tension basse sans consommation ohmique.

## Revendications

1. Dispositif de fourniture d'une première tension continue de valeur élevée et d'une deuxième tension continue de valeur faible, dans lequel la source de la première tension comprend un premier condensateur (C1 ; C2) recevant une tension alternative redressée, dans lequel le premier condensateur est connecté en série avec une source de tension continue de valeur faible comprenant en parallèle :
une première diode (Da) en série avec un deuxième condensateur (Ca), et
un redresseur (D) de polarité opposée à celle de la première diode,
les bornes (B, G) de la source de tension continue de valeur faible correspondant aux bornes du deuxième condensateur, le dispositif comprenant un limiteur (12) de la tension du deuxième condensateur,
**caractérisé en ce que** le limiteur de tension est un dispositif à retournement, de type thyristor, qui devient passant entre une première borne et une deuxième borne dès que la tension entre ces bornes dépasse un seuil déterminé, et **en ce que** ce limiteur de tension est connecté en parallèle avec la connextion série de la première diode et du deuxième condensateur.

2. Dispositif selon la revendication 1, **caractérisé en ce que** le dispositif à retournement est constitué d'un thyristor (Th) dont la gâchette et l'anode sont reliées par une diode zener (Z).

3. Dispositif selon la revendication 1, **caractérisé en ce qu'**un moyen de limitation de courant (R) est disposé en série avec les sources de tension.

## Claims

1. A device for providing a first high d.c. voltage and a second low d.c. voltage, wherein the first voltage source comprises a first capacitor (C1; C2) receiving a rectified a.c. voltage, wherein: the first capacitor is serially connected with a low d.c. voltage source; including, in parallel:
a first diode (Da) connected in series with a second capacitor (Ca), and
a rectifier (D) having a polarity opposite to that of the first diode,
the terminals (B, G) of the low d.c. voltage source corresponding to the terminals of the second capacitor, the device comprising a limiter (12) of the voltage of the second capacitor,
**characterized in that** the voltage limiter is a breakover device, of the thyristor type, that is turned on between a first terminal and a second terminal as soon as the voltage between these terminals becomes higher than a determined threshold, and **in that** said voltage limiter is parallel connected with the serial connection of the first diode and the second capacitor.

2. The device of claim 1, **characterized in that** the breakover device is a thyristor (Th) having its gate and anode connected through a zener diode (Z).

3. The device of claim 1, **characterized in that** a current limiting means (R) is connected in series with the voltage sources.

## Patentansprüche

1. Eine Vorrichtung zum Liefern einer ersten hohen Gleichspannung und einer zweiten niedrigen Gleichspannung, wobei die erste Spannungsquelle einen ersten Kondensator (C1; C2) aufweist, der eine gleichgerichtete Wechselspannung erhält, wobei der erste Kondensator mit einer eine niedrige Gleichspannung liefernden Quelle verbunden ist, wobei folgendes parallel dazu vorgesehen ist:
eine erste Diode (Da) in Serie geschaltet mit einem zweiten Kondensator (Ca), und einen Gleichrichter (D) mit einer Polarität entgegengesetzt zu der der ersten Diode,
wobei die Anschlüsse (B, G) der eine niedrige Gleichspannung besitzenden Quelle den Anschlüssen des zweiten Kondensators entsprechen, und wobei die Vorrichtung ferner einen Begrenzer (12) der Spannung des zweiten Kondensators aufweist,
**dadurch gekennzeichnet, daß** der Spannungsbegrenzer eine Unterbrechungsvorrichtung des Thyristortyps ist, die zwischen einem ersten Anschluß und einem zweiten Anschluß angeschaltet wird, sobald die Spannung zwischen diesen Anschlüssen größer wird als eine vorbestimmte Schwelle und ferner **dadurch gekennzeichnet, daß** der Spannungsbegrenzer parallel mit der Serienschaltung der ersten Diode und des zweiten Kondensators geschaltet ist.

2. Vorrichtung nach Anspruch 1, **dadurch gekennzeichnet, daß** die Unterbrechungsvorrichtung ein Thyristor (Th) ist, dessen Gate und Anode über eine Zehnerdiode (Z) verbunden sind.

3. Vorrichtung nach Anspruch 1, **dadurch gekennzeichnet, daß** Strombegrenzungsmittel (R) in Serie mit den Spannungsquellen geschaltet sind.
